# EUROPEAN PATENT APPLICATION

(11) **EP 4 640 406 A1**
(43) Date of publication of application: **29.10.2025**
(21) Application number: 23907143.4
(22) Date of filing: 21.12.2023
(51) Int. Cl.: B29C 49/06, B29B 11/08, B29C 49/18, B29C 49/48, B29C 49/64, B29C 49/78

(54) **PREFORM, METHOD FOR PRODUCING RESIN CONTAINER, AND DEVICE FOR PRODUCING RESIN CONTAINER**

(30) Priority: 21.12.2022 JP 2022204775
(71) Applicant: Nissei ASB Machine Co., Ltd., Komoro-shi, Nagano 384-8585 (JP)
(72) Inventor: KOMIYAMA, Tomokazu, Komoro-shi, Nagano 384-8585 (JP); OGIHARA, Manabu, Komoro-shi, Nagano 384-8585 (JP); NAGASAKI, Atsushi, Komoro-shi, Nagano 384-8585 (JP); USAMI, Masayuki, Komoro-shi, Nagano 384-8585 (JP)
(74) Representative: Novagraaf International SA
(86) International application number: PCT/JP2023/045973
(87) International publication number: WO 2024/135783

(57) **Abstract**

A preform (20) for producing a resin container including a container head portion, a container body portion, and a container bottom portion includes an annular neck portion (21) that forms the container head portion, and a body portion (22) that forms the container body portion and the container bottom portion. An angle (θ) formed by a central axis (X) of the neck portion (21) and the body portion (22) ranges from 80° to 100°.

## Description

### TECHNICAL FIELD

The present disclosure relates to a preform, a method for producing a resin container, and an apparatus for producing a resin container.

### BACKGROUND ART

Patent Literature 1 discloses a method for producing a resin container. The resin container is produced by adjusting a temperature of a preform, which has been produced by an injection molding section, to a temperature suitable for blow molding and then performing blow molding on the preform.

### CITATION LIST

### PATENT LITERATURE

Patent Literature 1: WO 2021/221024

### SUMMARY OF INVENTION

### TECHNICAL PROBLEM

In recent years, it has been desired to reduce the amount of resin in a preform that forms the container body portion and the container bottom portion of a resin container for weight reduction. However, when a resin container is produced by using a stretch blow molding method (particularly, a hot parison method), it is necessary to design the thickness distribution and shape of the preform in consideration of the shape of the resin container to be produced, required specifications (rigidity and transparency), and an expected degree of stretching, and it is not possible to simply reduce the thickness of the preform. In addition, if the thickness of the preform is simply reduced, production defects are likely to occur when the preform is formed by injection molding or when the preform is released from the injection molding mold. Furthermore, it is difficult to adjust the temperature distribution (heat quantity distribution) of the preform immediately before blowing, and it is also difficult to produce a resin container having the required shape and specifications by appropriately stretching the preform during blow molding.

The present disclosure aims to provide a preform, an apparatus for producing a resin container, and a method for producing a resin container that achieve both weight reduction and suppression of production defects of resin containers.

### SOLUTION TO PROBLEM

A preform according to one aspect of the present disclosure is a preform for producing a resin container including a container head portion, a container body portion, and a container bottom portion, the preform including an annular neck portion that forms the container head portion, and a body portion that forms the container body portion and the container bottom portion, in which an angle formed by a central axis of the annular neck portion and the body portion ranges from 80° to 100°.

A method for producing a resin container according to one aspect of the present disclosure is a method for producing a resin container including a container head portion, a container body portion, and a container bottom portion, the method including an injection molding step of injecting a molten resin into an injection cavity formed by an injection molding mold to form a first preform, a temperature adjustment step of adjusting a temperature of a second preform to a temperature suitable for blow molding while the first preform is deformed into the second preform, and a blow molding step of blow-molding the second preform to produce a resin container, in which the temperature adjustment step includes forming the second preform by stretching the first preform and bringing the first preform into contact with an inner wall surface of a temperature adjustment cavity formed by a temperature adjustment mold, the first preform includes an annular neck portion that forms the container head portion, and a body portion that forms the container body portion and the container bottom portion, and an angle formed by a central axis of the annular neck portion and the body portion ranges from 80° to 100°.

An apparatus for producing a resin container according to an aspect of the present disclosure is an apparatus for producing a resin container including a container head portion, a container body portion, and a container bottom portion, the device including an injection molding section including an injection molding mold that forms an injection cavity for producing a first preform, a temperature adjustment section including a deformation section that deforms the first preform into a second preform and a temperature adjustment mold that forms a temperature adjustment cavity, and a blow molding section including a blow molding mold that defines a shape of the resin container produced by blow-molding the second preform, in which an inner wall surface of the temperature adjustment cavity is configured to cool the first preform by coming into contact with the first preform and define a shape of the second preform, an inner wall surface of the injection cavity defines, for the first preform, an annular neck portion that forms the container head portion and a body portion that forms the container body portion and the container bottom portion, and an angle formed by a central axis of the annular neck portion and the body portion ranges from 80° to 100°.

### ADVANTAGEOUS EFFECTS OF INVENTION

According to the present disclosure, it is possible to provide a preform for a resin container, an apparatus for producing a resin container, and a method for producing a resin container that achieve both weight reduction and reduction of production defects of resin containers.

### BRIEF DESCRIPTION OF DRAWINGS

FIG. 1 is a block diagram of an apparatus for producing a resin container according to the present embodiment.
FIG. 2 is a diagram illustrating a resin container produced by a production apparatus according to the present embodiment.
FIG. 3 is a diagram illustrating a first preform.
FIG. 4 is a diagram illustrating a second preform.
FIG. 5 is a diagram illustrating an injection molding section.
FIG. 6 is a diagram illustrating a temperature adjustment section.
FIG. 7 is a diagram illustrating the temperature adjustment section.
FIG. 8 is a diagram illustrating a blow molding section.
FIG. 9 is a diagram illustrating a method for producing a resin container.

### DESCRIPTION OF EMBODIMENTS

Hereinafter, as an embodiment of the present disclosure, a production apparatus 100 and a production method for a resin container 10 will be described with reference to the drawings. The dimensions of each member illustrated in the drawings may differ from the actual dimensions thereof for convenience of description.

Furthermore, for convenience of description, reference will be made to an "up-down direction", and a "left-right direction" as appropriate. Here, the "up-down direction" is a direction including an "upward direction" and a "downward direction". The "left-right direction" is a direction including a "leftward direction" and a "rightward direction". A reference sign U illustrated in the drawings described below denotes the upward direction. A reference sign D denotes the downward direction. A reference sign L denotes the leftward direction. A reference sign R denotes the rightward direction. Unless otherwise specified, the direction in which the first preform, the second preform, and the opening of the resin container are provided is described as an upward direction.

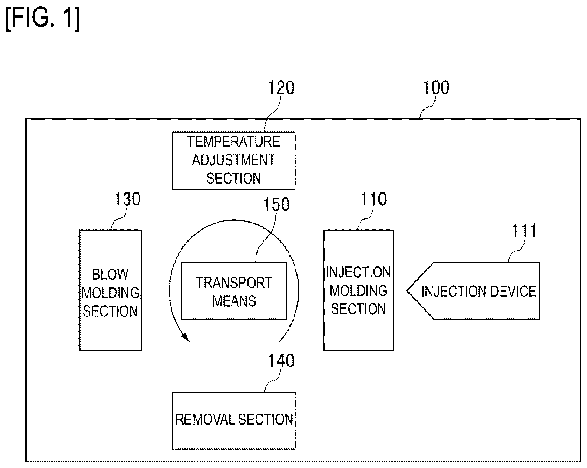

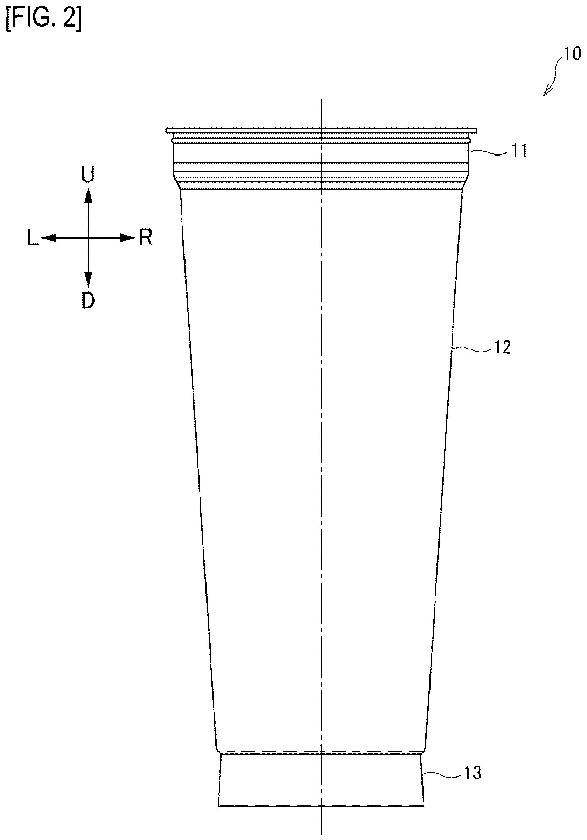

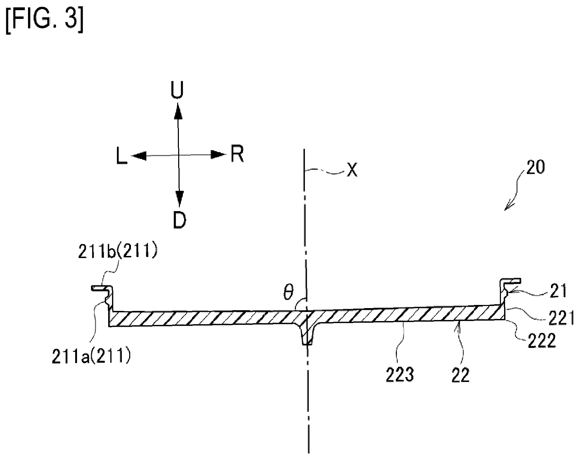

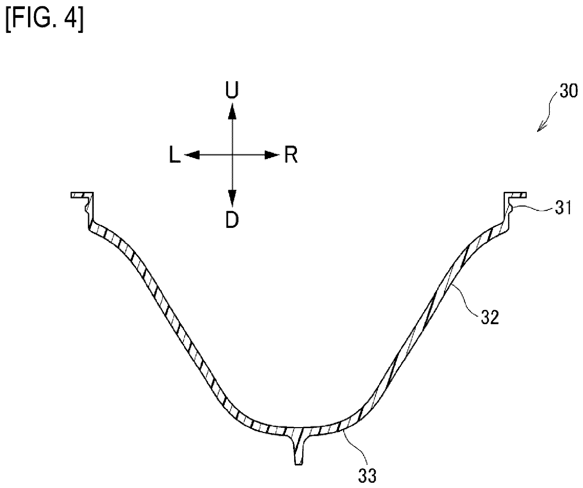

FIG. 1 is a block diagram of the production apparatus 100 for the resin container 10 (see FIG. 2) according to the present embodiment. As illustrated in FIG. 1, the production apparatus 100 is a blow molding apparatus that uses the hot parison method (one-stage blow molding method or injection stretch-blow molding method) and includes an injection molding section 110, a temperature adjustment section 120, a blow molding section 130, and a removal section 140. The injection molding section 110 produces a first preform 20 (see FIG. 3), which will be described below, by injecting a molten resin from an injection device 111. While transforming the first preform 20 into a second preform 30 (see FIG. 4), which will be described below, the temperature adjustment section 120 adjusts the temperature of the second preform 30 to a temperature suitable for blow molding. The blow molding section 130 produces the resin container 10 by blow-molding the second preform 30. The removal section 140 removes the resin container 10 produced by the blow molding section 130.

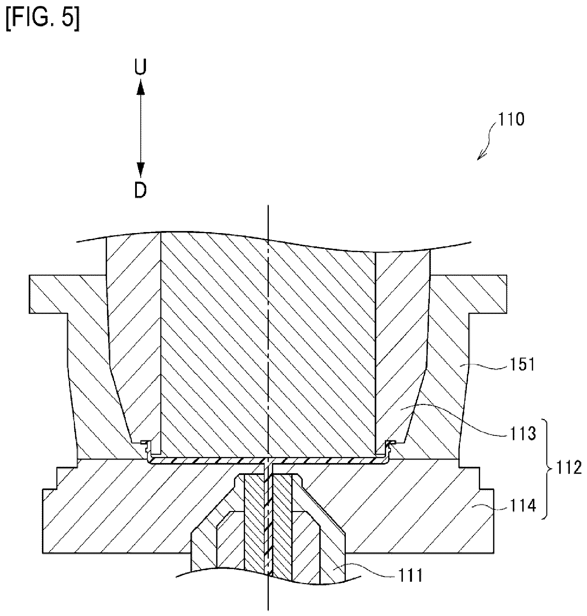

The injection molding section 110, the temperature adjustment section 120, the blow molding section 130, and the removal section 140 are provided at positions obtained by rotation by a predetermined angle about the transport means 150. In the present embodiment, the predetermined angle is 90 degrees. The transport means 150 includes a rotating plate, which is not illustrated. A neck mold 151 (see FIG. 5), which will be described below, is attached to the rotating plate. Since the rotating plate rotates with the neck mold 151 holding the first preform 20 and the second preform 30, the first preform 20 and the second preform 30 are configured to be transported to each of the injection molding section 110, the temperature adjustment section 120, the blow molding section 130, and the removal section 140.

FIG. 2 illustrates a resin container 10 produced by the production apparatus 100 according to the present embodiment. The resin container 10 includes a container head portion 11, a container body portion 12, and a container bottom portion 13 as illustrated in FIG. 2. The container head portion 11 forms an opening of the resin container 10. The container body portion 12 is connected to the container head portion 11, forming the side surface of the resin container 10. The container bottom portion 13 is connected to the container body portion 12, blocking one end of the container body portion 12.

FIG. 3 illustrates the first preform 20. The first preform 20 includes an annular neck portion 21 and a body portion 22 as illustrated in FIG. 3. The neck portion 21 includes at least one annular flange portion 211 protruding from an outer peripheral surface in the outer diameter direction. The flange portion 211 includes at least a first flange portion 211a, which is disposed between the upper end of the neck portion 21 and the body portion 22, and a second flange portion 211b which is disposed at the upper end of the neck portion 21 and protrudes in the outer diameter direction as necessary. The first flange portion 211a is a portion supported by the neck mold 151 during production. The first flange portion 211a is a portion to which a lid or a seal member is fixed. The second flange portion 211b is preferably formed to have a larger diameter than that of the first flange portion 211a. The body portion 22 is continuously connected below the neck portion 21, and has a circular and substantially flat plate shape. The body portion 22 includes at least a side surface portion 221 which extends downward from the outer peripheral surface of the neck portion 21 in a flush manner, a corner portion 222 which is located at the lower end of the side surface portion 221 and bent toward the inner diameter side, and a plate-shaped portion (flat surface portion) 223 which extends from the corner portion 222 in the horizontal direction. Furthermore, a gate portion, which is a trace of the resin introduction hole of an injection cavity mold 114, may be provided at the center of the outer surface of the plate-shaped portion 223 of the body portion 22. In a side view, the outer surface of the body portion 22 (more specifically, the plate-shaped portion 223) preferably has a substantially horizontal shape, but may have a curved shape (curved surface shape) gently protruding downward toward the gate portion. Furthermore, in a side view, the inner surface of the body portion 22 also preferably has a substantially horizontal shape, but may have a curved shape (curved surface shape) gently protruding downward toward the gate portion. When the outer surface shape of the body portion 22 is a substantially horizontal shape, the outer surface and the inner surface of the body portion 22 are preferably formed substantially parallel to each other. In addition, in the above case, it is preferable that the thickness of the body portion, except for the gate portion, be set to be substantially uniform. The neck portion 21 forms the container head portion 11 that forms an opening of the resin container 10. The body portion 22 is blow-molded to form the container body portion 12 and the container bottom portion 13 of the resin container 10. The first preform 20 is an example of a preform.

In the present embodiment, the angle θ formed by the central axis X of the neck portion 21 and the body portion 22 (or the outer surface or the inner surface of the body portion 22 (more specifically, the plate-shaped portion 223)) is substantially 90° (regarding the outer surface of the body portion 22 as a horizontal surface without a gate portion). At this time, the angle of the corner portion of the body portion 22 is also substantially 90°. However, the body portion 22 may be formed to be inclined with respect to the central axis X. The angle formed by the central axis X of the neck portion 21 and the body portion 22 (or the outer surface or the inner surface of the body portion 22) preferably ranges from 80° to 100°. In this case, the angle of the corner portion of the body portion 22 also preferably ranges from 80° to 100°. Therefore, the shape of the first preform 20 is a flat shape in the direction of the central axis X. In addition, the thickness of the body portion 22 (more specifically, the plate-shaped portion 223) of the first preform 20 excluding the gate portion is preferably 2.0 mm or greater and 6.0 mm or less, and more preferably 3.0 mm or greater and 5 mm or less.

FIG. 4 illustrates the second preform 30. As illustrated in FIG. 4, the second preform 30 is different from the first preform 20 in that the body portion 22 of the first preform 20 has a shape protruding downward. In other words, the second preform 30 has a substantially conical shape. The second preform 30 may have a shape different from that of the second preform 30 in the present embodiment as long as the shape is suitable for blow molding by the blow molding section 130. The second preform 30 has a substantially conical shape, and a body wall 32 and a bottom wall 33 have a smaller thickness (thinner) than that of the body portion 22 of the first preform 20. In addition, the shape and thickness of a neck portion 31 of the second preform 30 are the same as those of the neck portion 21 of the first preform 20.

A material for forming the first preform 20, the second preform 30, and the resin container 10 are thermoplastic synthetic resins and can be selected appropriately according to the required specifications and the like. Examples of specific types of the material include polyethylene terephthalate (PET), polyethylene naphthalate (PEN), polycyclohexane dimethylene terephthalate (PCTA), Tritan (registered trademark; a copolyester manufactured by Eastman Chemical Company), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate (PMMA, acrylic), and polylactic acid (PLA). In addition, an additive such as a coloring material may be added to the material. Note that, for the material of the first preform 20, the second preform 30, and the resin container 10 of the present embodiment, PET is most preferred.

FIG. 5 illustrates the injection molding section 110. The injection molding section 110 includes an injection molding mold 112. The injection molding mold 112 forms an injection cavity (molding space). The injection molding mold 112 includes at least an injection molding core 113 and an injection cavity mold 114. In addition, the injection molding mold 112 may include a neck mold 151 which is also a part of the transport means 150 during molding (temporarily). The injection molding core 113 primarily defines an injection cavity corresponding to an inner wall surface of the first preform 20. The injection cavity mold 114 defines an injection cavity corresponding to the outer wall surface of the first preform 20 together with the neck mold 151. Specifically, the neck mold 151 defines an injection cavity corresponding to the outer wall surface of the neck portion 21 of the first preform 20, and the injection cavity mold 114 defines an injection cavity corresponding to the outer wall surface of the body portion 22 of the first preform 20. The neck mold 151 defines an injection cavity corresponding to the flange portion 211 of the neck portion 21. More specifically, the neck mold 151 defines an injection cavity corresponding to the first flange portion 211a of the neck portion 21. The neck mold 151 and the injection molding core 113 also define an injection cavity mold corresponding to the second flange portion 211b.

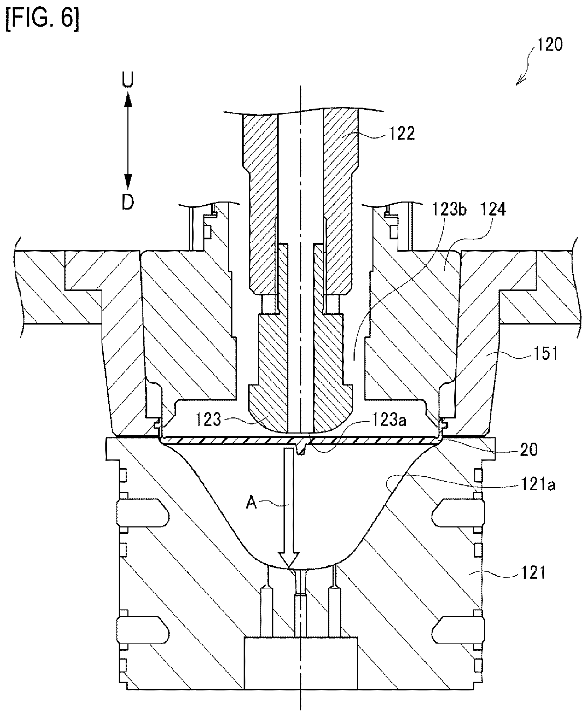

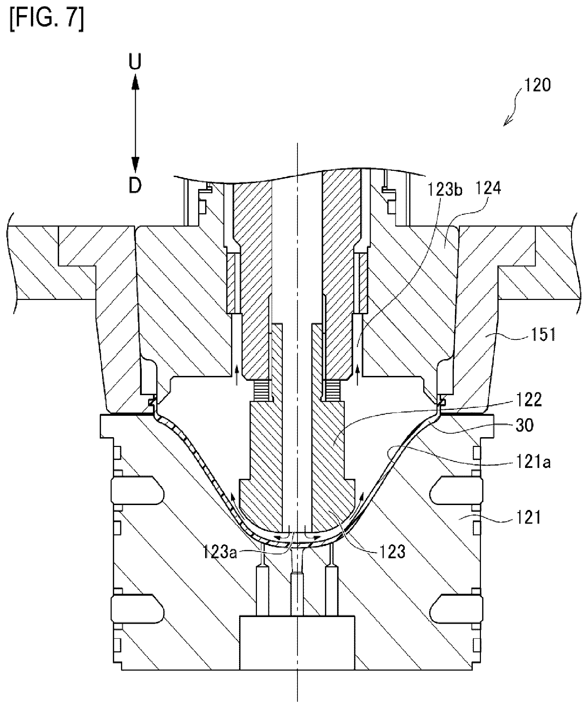

FIGS. 6 and 7 illustrate the temperature adjustment section 120. The temperature adjustment section 120 includes, as temperature adjustment mold members, a temperature adjustment mold (temperature adjustment pot mold) 121, a cooling rod (first hollow rod member, temperature adjustment rod) 122, and a fitting core (second hollow rod member) 124 that contacts the neck portions 21 and 31 in an airtight manner. In addition, the temperature adjustment molding members may include a neck mold 151 which is also a part of the transport means 150 during molding (temporarily). The temperature adjustment mold 121 forms a temperature adjustment cavity. The temperature adjustment cavity corresponds to the shape of the outer wall surface of the second preform 30. The cooling rod 122 is configured to be displaceable in the up-down direction. The fitting core 124 is configured to contact the neck portion 21 of the first preform 20 and the neck portion 31 of the second preform 30 and to introduce (supply) or discharge (emit) compressed air at a predetermined pressure into or from the first preform 20 or the second preform 30. The cooling rod 122 includes a contact portion 123. The contact portion 123 is configured to come in contact with at least a portion of the inner wall surface of the first preform 20 and the second preform 30. The contact portion 123 is formed of a metallic material having good heat conductivity, for example, aluminum or an aluminum alloy. A first air flowing port 123a is formed in the contact portion 123 of the cooling rod 122. The first air flowing port 123a is configured to introduce (supply) compressed air at a predetermined pressure into the first preform 20 or the second preform 30 through the inside of the cooling rod 122. In addition, a second air flowing port 123b is formed between the cooling rod 122 and the fitting core 124. The second air flowing port 123b is configured to release (discharge) compressed air from the first preform 20 or the second preform 30. The cooling rod 122 is an example of a deformation section. Note that the temperature adjustment section 120 may be configured to introduce compressed air at a predetermined pressure from the second air flowing port 123b into the first preform 20 or the second preform 30 and discharge air from the first air flowing port 123a.

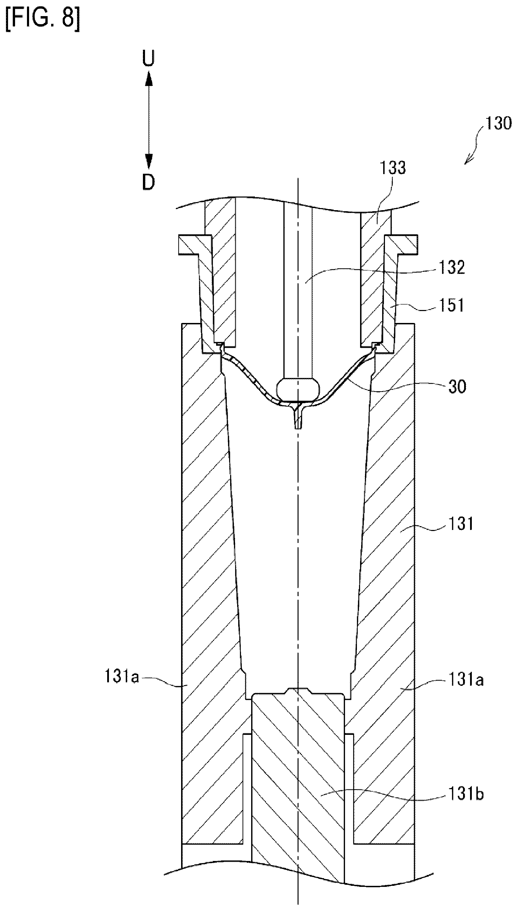

FIG. 8 illustrates the blow molding section 130. The blow molding section 130 includes a blow molding mold (blow mold) 131, a stretch rod 132, and a blow core mold (blow nozzle) 133 that introduces and discharges blow air as mold members for blow molding. In addition, the mold members for blow molding may include a neck mold 151 which is also a part of the transport means 150 during molding (temporarily). The blow molding mold 131 is configured to define the shape of the resin container 10. The blow molding mold 131 includes a pair of blow cavity molds 131a that can be opened and closed and define the shape of the container body portion 12 of the resin container 10, and a bottom mold 131b that defines the shape of the container bottom portion 13 of the resin container 10. The stretch rod 132 is configured to be displaceable in the up-down direction. The stretch rod 132 is configured to come in contact with the second preform 30 conveyed to the blow molding section 130 and stretch the second preform 30 downward. The blow core 133 contacts the neck portion 31 and is responsible for introducing (supplying) and discharging (emitting) blow air to and from the second preform 30.

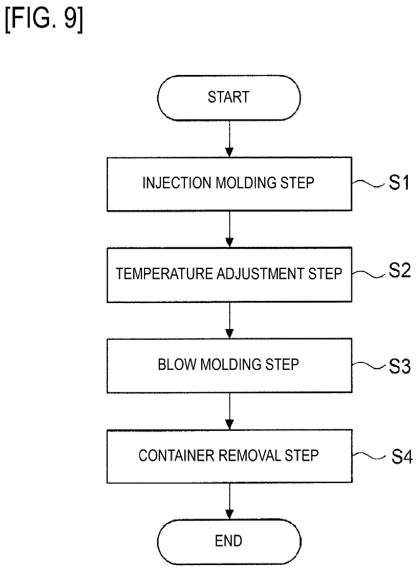

Next, a method for producing a resin container will be described. FIG. 9 illustrates the method for producing a resin container. As shown in FIG. 9, the method for producing a resin container is a method using a hot parison method, and includes at least an injection molding step S1, a temperature adjustment step S2, and a blow molding step S3. The production method of the present embodiment further includes a container removal step S4.

The injection molding step S1 includes injecting a molten resin into an injection cavity formed by the injection molding mold 112 to form the first preform 20 as illustrated in FIG. 5. The molten resin injected from the injection device 111 the injection molding mold 112 into the injection cavity is cooled due to the injection molding mold 112, and thereby the first preform 20 is formed. In the injection molding step S1, the first preform 20 may be released from the injection molding mold 112 at a high temperature. Specifically, during the injection molding of the first preform 20, in the cooling step after the completion of the filling step (including the pressure holding step), the cooling time is set to 1/2 or less, preferably 1/3 or less the filling time, and more preferably 0 seconds, and the first preform 20 is released from the injection molding mold 112 while the retained heat is still high. The first preform 20 released from the injection molding mold 112 is conveyed to the temperature adjustment section 120 while being held by the neck mold 151.

The temperature adjustment step S2 includes adjusting the temperature of the second preform 30 to a temperature suitable for blow molding while the first preform 20 is deformed into the second preform 30 as illustrated in FIGS. 6 and 7. The temperature adjustment step S2 further includes stretching the first preform 20 and bringing the first preform 20 into contact with the inner wall surface 121a of the temperature adjustment cavity formed by the temperature adjustment mold 121, thereby forming the second preform 30. In the present embodiment, the temperature adjustment step S2 includes a step of displacing (lowering) the cooling rod 122 that is in contact with the body portion 22 of the first preform 20 and ejecting the compressed air from the first air flowing port 123a or the second air flowing port 123b to bring the first preform 20 into contact with the inner wall surface 121a of the temperature adjustment cavity (preliminary blowing step). Furthermore, the temperature adjustment step S2 of the present embodiment includes a step of introducing compressed air for cooling into the second preform 30 through the second air flowing port 123b or the first air flowing port 123a after the second preform 30 is formed and performing a process of emitting air from the first air flowing port 123a or the second air flowing port 123b, thereby cooling the second preform 30 (cooling blow step). Note that, in the preliminary blowing step and the cooling blow step, the directions in which the compressed air flows may be set to be opposite to each other.

Specifically, the first preform 20 conveyed from the injection molding section 110 to the temperature adjustment section 120 is brought into contact with the contact portion 123 and stretched as the cooling rod 122 is displaced downward. The stretching of the first preform 20 by the cooling rod 122 may be referred to as preliminary stretching. The downward displacement (lowering) of the cooling rod 122 is performed until the first preform 20 reaches a position near the lower end of the inner wall surface 121a of the temperature adjustment cavity defined by the temperature adjustment mold 121 (to the extent that the first preform 20 does not come into contact with the inner wall surface 121a) (white arrow A). Due to the preliminary stretching, the first preform 20 is stretched greatly in the longitudinal axis direction and deformed into a shape close to the second preform 30. When the first preform 20 is stretched to the position near the lower end of the inner wall surface 121a of the temperature adjustment cavity, the cooling rod 122 stops the displacement (lowering). At this time, a gap is formed between the lower outer surface (bottom portion) of the stretched first preform 20 and the inner wall surface 121a. The vicinity of the gate portion of the first preform 20 is cooled from the inside due to the contact with the contact portion 123. In addition, the body portion 22 of the first preform 20 becomes thin while radiating heat due to the preliminary stretching, and therefore the temperature thereof decreases (is cooled).

Next, compressed air is introduced from the first air flowing port 123a formed in the contact portion 123 of the cooling rod 122. At this time, the second air flowing port 123b is closed. As a result, the preliminarily stretched first preform 20 is further expanded and brought into contact with the temperature adjustment mold 121 to have the shape of the second preform 30 (preliminary blowing step). Then, after the second air flowing port 123b is opened, the compressed air continuously flows, and the introduced compressed air is discharged from the second air flowing port 123b through the outside of the cooling rod 122. Therefore, the outside of the second preform 30 is cooled by being in contact with the temperature adjustment mold 121, and the inside of the second preform 30 is cooled by the compressed air continuously flowing (cooling blow step). Thus, when the first preform 20 is deformed into the shape of the second preform 30, the second preform 30 can be cooled at a high speed in the temperature adjustment step S2. The second preform 30 that has been cooled to a temperature suitable for blow molding in the temperature adjustment section 120 is conveyed to the blow molding section 130 while being held by the neck mold 151. Note that, when or after the cooling rod 122 is lowered (after the preliminary stretching), a method in which compressed air is introduced from the second air flowing port 123b while the first air flowing port 123a is closed, the first preform 20 is brought into contact with the temperature adjustment mold 121 to form the shape of the second preform 30 (preliminary blowing step), and then the first air flowing port 123a is opened to keep the compressed air flowing from the first air flowing port 123a, and the air is discharged from the second air flowing port 123b to cool the second preform 30 (cooling blow step) may be performed.

The blow molding step S3 includes blow-molding the second preform 30 to produce the resin container 10 as illustrated in FIG. 8. The blow molding step S3 of the present embodiment further includes stretching the second preform 30 by displacing the stretch rod 132.

Specifically, the second preform 30 conveyed from the temperature adjustment section 120 is accommodated in the blow molding mold 131 and is brought into contact with the stretch rod 132 to be stretched downward. Then, blow air (compressed air) is introduced into the second preform 30 from the neck portion 21 of the second preform 30 via the blow core 133 to blow-mold the second preform 30. The second preform 30 is deformed into a shape corresponding to the inner wall surface of the blow cavity defined by the blow molding mold 131 through the blow molding, thereby forming the resin container 10. The produced resin container is conveyed to the removal section 140 while being held by the neck mold and then removed from the production apparatus 100 in container removal step S4. Note that the blow air is set to a higher pressure than the compressed air used in temperature adjustment step S2 in order to enhance the formability.

The preform is designed to have an optimal shape, considering factors such as the size, shape, specifications, degree of stretching, and the like of the resin container. If a preform has an excessively high stretch ratio during blow molding, defects of preventing a container from having the desired shape and thickness distribution may occur even after blow molding. Therefore, for the container of the present embodiment, the preform is designed to have a substantially conical shape (similar to the second preform), for example, as in the related art.

In recent years, there has been a demand to reduce the amount of resin required for producing a resin container in order to save resources of resin materials. However, if the thickness of the conical preform is reduced, the width of the injection cavity becomes too narrow, making it difficult to fill the injection cavity with molten resins. Therefore, problems such as molding defects, including short shots, and the imposition of an undesired temperature distribution on the preform are likely to occur. Thus, this makes it difficult to produce a conical and thin preform by injection molding. In addition, since the heat retained by the produced preform is likely to decrease, the preform is not sufficiently stretched even after blow molding, particularly in a blow molding method/blow molding apparatus using the hot parison method, and a desired resin container may not be obtained.

In the first preform 20 having the above configuration, the angle θ formed by the central axis X of the neck portion 21 and the body portion 22 (or the angle of the corner portion 222) ranges from 80° to 100°, and the body portion 22 is sufficiently thick to prevent any trouble during injection molding and to secure the retained heat required for the blow molding. The flat first preform 20 described above can reduce the amount of resin (volume) for the entire preform while having a thickness suitable for performing injection molding and securing the retained heat required for the blow molding. By blow molding the first preform 20 while deforming the first preform 20, the resin container 10 can be provided with less production defects such as appearance defects while reducing the weight.

According to the production method and the production apparatus 100 for producing the resin container 10, the first preform 20 is produced such that the angle formed by the central axis X of the neck portion 21 and the body portion 22 (the angle of the corner portion 222) ranges from 80° to 100°. While the flat first preform 20 has a thickness required for injection molding, the amount of resin (volume) of the entire first preform 20 is reduced. The resin container 10 having a reduced weight is produced from the first preform 20. Since the first preform 20 does not have a shape suitable for the resin container 10 to be finally produced, the stretch ratio becomes excessively high even if the first preform 20 is simply blow-molded, and the resin container 10 may not be molded with satisfaction. According to the above configuration, in the temperature adjustment step S2, the first preform 20 is stretched and transformed into the second preform 30. Therefore, as compared with a case in which the resin container 10 is produced from the first preform 20, the stretch ratio is reduced by producing the resin container 10 from the second preform 30, and the resin container 10 is easily produced with satisfaction. Accordingly, the production method and the production apparatus 100 for the resin container 10 that achieve both weight reduction and reduced production defects of the resin container 10 are provided.

The first preform 20 is produced such that the thickness of the body portion 22 is equal to or less than 5 mm. The resin container 10 produced from the preform is lighter in weight. In addition, according to the production method and the production apparatus 100 for the resin container 10 having the above-described configuration, the resin container 10 is produced satisfactorily from the preform having a reduced weight as described above.

According to the production method for the resin container 10, in the injection molding step S1, the first preform 20 is released from the injection molding mold 112 at a high temperature. In order to shorten the cycle time of the production of the resin container 10, it is important to shorten the time for the injection molding step S1. The first preform 20 is released from the injection molding mold 112 at a high temperature, and thus the time for cooling the molten resin in the injection molding step S1 is shortened, and the cycle time of the production of the resin container 10 is also shortened. Furthermore, since the first preform 20 is brought into contact with the temperature adjustment cavity by the displacement of the cooling rod 122, the deformation of the first preform 20 into the second preform 30 can be performed in a simple configuration.

According to the production method for the resin container 10 having the above configuration, the temperature adjustment step S2 includes introducing cooled air into the second preform 30 through the first air flowing port 123a formed in the cooling rod 122. For this reason, in the temperature adjustment step S2, the compressed air can be introduced into the second preform 30 through the first air flowing port 123a formed in the cooling rod 122. When the preform is gradually cooled in the temperature adjustment step S2, appearance defects such as whitening may occur. The outside of the second preform 30 is cooled by contacting the inner wall surface 121a of the temperature adjustment cavity, and the inside of the second preform 30 is cooled by the introduction and convection of the compressed air, so the cooling rate of the second preform 30 is improved.

Although embodiments of the present disclosure have been described above, the technical scope of the present disclosure, needless to say, should not be construed as being limited by the description of the embodiments. It should be understood by a person skilled in the art that the embodiments are merely examples, and that various modifications of the embodiments are possible within the scope of the invention described in the claims. The technical scope of the present disclosure is determined on the basis of the scope of the invention described in the claims and equivalent scopes thereof.

For example, although the first preform 20 in which the angle θ formed by the central axis X of the neck portion 21 and the body portion 22 is substantially 90° has been described in the present embodiment, the shape of the first preform 20 is not limited to the example of the present embodiment, and the angle θ formed by the central axis X of the neck portion 21 and the body portion 22 may be appropriately selected within a range from 80° to 100°. For example, when the angle θ formed by the central axis X of the neck portion 21 and the body portion 22 is 100°, the body portion 22 of the first preform 20 has a shape protruding downward from the lower end portion of the neck portion 21. When the angle θ formed by the central axis X of the neck portion 21 and the body portion 22 is 80°, the body portion 22 of the first preform 20 has a shape protruding upward from the lower end portion of the neck portion 21.

In the body portion 22 of the first preform 20, the thickness of the body portion 22 need not be uniform. For example, the thickness of the body portion 22 in the vicinity of the neck portion 21 may be greater than the thickness in the vicinity of the center of the body portion 22. This makes it easier to secure the retained heat in the body portion near the neck portion 21, which is particularly likely to be cooled, in the first preform 20.

This application is based on Japanese Patent Application (Patent Application No. 2022-204775) filed on Dec. 21, 2022, the contents of which are incorporated herein by reference.

### REFERENCE SIGNS LIST

10 Resin container
11 Container head portion
12 Container body portion
13 Container bottom portion
20 First preform
21 Neck portion
22 Body portion
30 Second preform
100 Production apparatus
110 Injection molding section
111 Injection device
112 Injection molding mold
113 Injection molding core
114 Injection cavity mold
120 Temperature adjustment section
121 Temperature adjustment mold
121a Inner wall surface
122 Cooling rod
123 Contact portion
123a First air flowing port
123b Second air flowing port
130 Blow molding section
131 Blow molding mold
132 Stretch rod
140 Removal section
150 Transport means
151 Neck mold
211 Flange portion
221 Side surface portion
222 Corner portion
223 Plate-shaped portion
X Central axis
S1 Injection molding step
S2 Temperature adjustment step
S3 Blow molding step
S4 Container removal step

## Claims

1. A preform for producing a resin container including a container head portion, a container body portion, and a container bottom portion, the preform comprising:
an annular neck portion that forms the container head portion; and
a body portion that forms the container body portion and the container bottom portion,
wherein
an angle formed by a central axis of the annular neck portion and the body portion ranges from 80° to 100°.

2. The preform according to claim 1, wherein a thickness of the body portion is 5 mm or less.

3. A method for producing a resin container including a container head portion, a container body portion, and a container bottom portion, the method comprising:
an injection molding step of injecting a molten resin into an injection cavity formed by an injection molding mold to form a first preform;
a temperature adjustment step of adjusting a temperature of a second preform to a temperature suitable for blow molding while the first preform is deformed into the second preform; and
a blow molding step of blow-molding the second preform to produce a resin container,
wherein
the temperature adjustment step includes forming the second preform by stretching the first preform and bringing the first preform into contact with an inner wall surface of a temperature adjustment cavity formed by a temperature adjustment mold,
the first preform includes an annular neck portion that forms the container head portion, and a body portion that forms the container body portion and the container bottom portion, and an angle formed by a central axis of the annular neck portion and the body portion ranges from 80° to 100°.

4. The method for producing a resin container according to claim 3, wherein a thickness of the body portion of the first preform is 5 mm or less.

5. The method for producing a resin container according to claim 3 or 4,
wherein,
in the injection molding step, the first preform is released from the injection molding mold at a high temperature, and
the temperature adjustment step includes a step of displacing a cooling rod brought into contact with the body portion of the first preform and ejecting compressed air from an air flowing port formed in the cooling rod, thereby bringing the first preform into contact with the inner wall surface of the temperature adjustment cavity.

6. The method for producing a resin container according to claim 5, wherein the temperature adjustment step includes introducing cooling air into the second preform through the air flowing port after the second preform is formed.

7. An apparatus for producing a resin container including a container head portion, a container body portion, and a container bottom portion, the apparatus comprising:
an injection molding section including an injection molding mold that forms an injection cavity for producing a first preform;
a temperature adjustment section including a deformation section that deforms the first preform into a second preform and a temperature adjustment mold that forms a temperature adjustment cavity; and
a blow molding section including a blow molding mold that defines a shape of the resin container produced by blow-molding the second preform,
wherein
an inner wall surface of the temperature adjustment cavity is configured to cool the first preform by coming into contact with the first preform and define a shape of the second preform,
an inner wall surface of the injection cavity defines, for the first preform, an annular neck portion that forms the container head portion and a body portion that forms the container body portion and the container bottom portion, and an angle formed by a central axis of the annular neck portion and the body portion ranges from 80° to 100°.

8. The apparatus for producing a resin container according to claim 7, wherein the injection cavity is configured such that a thickness of the body portion of the first preform is 5 mm or less.
